# EUROPÄISCHE PATENTSCHRIFT

(11) **EP 3 292 924 B1**
(45) Veröffentlichungstag und Bekanntmachung des Hinweises auf die Patenterteilung: **09.10.2019**
(21) Anmeldenummer: 17001393.2
(22) Anmeldetag: 14.08.2017
(51) Int. Cl.: B22C 9/06, B22D 17/22, B29C 45/73

(54) **FORMTEIL FÜR EIN WERKZEUG**
MOULD WITH COOLED CORE FOR A TOOL
MOULE REFROIDI POUR UN OUTIL

(30) Priorität: 08.09.2016 DE 102016010907
(43) Veröffentlichungstag der Anmeldung: 14.03.2018
(73) Patentinhaber: AUDI AG, 85045 Ingolstadt (DE)
(72) Erfinder: JANSEN, Sven, DE - 80803 München (DE); MEDERER, Matthias, DE - 92348 Berg (DE); SCHALLER, Ludwig, DE - 85051 Ingolstadt (DE); FERSTL, Michael, DE - 93155 Hemau (DE)

(56) Entgegenhaltungen:
- US-A1- 2006 249 872

## Beschreibung

Die Erfindung betrifft ein Formteil für ein Werkzeug zum Gießen eines Bauteils, ein Werkzeug zum Gießen eines Bauteils und ein Verfahren zum Gießen eines Bauteils.

Ein Druckgießwerkzeug umfasst mindestens zwei als Druckgießformen ausgebildete Formteile, die gebohrte Kanäle aufweisen, durch die ein zum Temperieren vorgesehenes Medium, bspw. Öl oder Wasser, mit einer vorgegebenen Temperatur geleitet wird. Allerdings ist hierbei zu bedenken, dass die gebohrten Kanäle nur eine verhältnismäßig geringe Oberfläche aufweisen, wodurch nur ein eingeschränkter Wärmeaustausch zwischen dem Medium und dem Formteil möglich ist. Außerdem ist zu berücksichtigen, dass die Bohrungen einer bspw. zerklüfteten Oberfläche eines Formteils nicht mit einem geringen und konstanten Abstand folgen können, der für eine optimale und gleichmäßige Temperierung erforderlich wäre. Es ist zwar möglich, auf die Oberfläche der Formteile für eine zusätzliche Kühlung Wasser aufzusprühen, was jedoch zu einem Thermoschock und einer möglichen Schädigung der Formteile durch Rissbildung führen kann. Außerdem kann hierdurch ein Verbrauch an Wasser erhöht werden. Weiterhin können Zykluszeiten während einer Durchführung eines Druckgießverfahrens hierdurch verlängert werden.

Diesbezüglich ist aus der Druckschrift DE 10 2006 008 359 A1 ein temperierbares Werkzeug aus einem gegossenen metallischen Werkstoff zur Formgebung von Werkstücken bekannt. Dieses Werkzeug umfasst einen Formhohlraum, der durch eine Formschale konturnah von einem Kühlraum getrennt angeordnet ist.

Ein Formteil mit wenigstens einer Formfläche, die einen flächig gekühlten oder beheizten Bereich umfasst und eine Anordnung von bereichsnah hinter der Formfläche angeordneten Kanälen zur Führung eines Kühl- oder Heizmediums aufweist, ist in der Druckschrift DE 10 2007 054 723 A1 bekannt.

Außerdem sind in den Druckschriften EP 2 388 086 A1, EP 2 388 087 A1, EP 2 388 088 A1 und EP 2 388 089 A1 Druckgussformteile für Druckgussformen bekannt.

Ein Werkzeug zum Durchführen eines Formverfahrens, mit dem ein Artikel hergestellt wird, ist aus der Druckschrift US 2006/0249872 A1 bekannt. Das Werkzeug umfasst einen Werkzeugkörper mit einer Formseite und einer Rückseite, mehrere Distanzblöcke und Flüssigkeitsleitungen, wobei jeweils ein Distanzblock mit einer Flüssigkeitsleitung verbunden ist, einen Einsatz mit daran befestigten Stützen und leitfähiges Material. Die Flüssigkeitsleitungen mit den Distanzblöcken werden in einem Hohlraum zwischen dem Werkzeugkörper und dem Einsatz angeordnet. Dann wird das leitfähige Material verflüssigt und durch eine Öffnung des Einsatzes in den Hohlraum gefördert. Dabei werden die Distanzblöcke und die Stützen durch das verflüssigte heiße leitfähige Material geschmolzen. Hierbei wird eine Komponente hergestellt, die das ausgehärtete Material und die darin eingehüllten Flüssigkeitsleitungen umfasst. Diese Flüssigkeitsleitungen sind zum Erwärmen oder Kühlen der Formseite des Werkzeugkörpers beim Herstellen des Artikels vorgesehen.

Vor diesem Hintergrund stellt sich die Aufgabe, ein Werkzeug zum Gießen eines Bauteils besser zu temperieren.

Die Aufgabe wird mit einem Formteil, einem Werkzeug und einem Verfahren mit den Merkmalen der unabhängigen Patentansprüche vorgestellt. Ausführungsformen des Formteils, des Werkzeugs und des Verfahrens gehen aus den abhängigen Patentansprüchen und der Beschreibung hervor.

Das erfindungsgemäße Formteil ist als Teil eines Werkzeugs zum Gießen eines Bauteils ausgebildet und weist als Komponenten mindestens einen Kontureinsatz und mindestens einen Kern auf, die bspw. aus Stahl gebildet sind. Dabei weist der mindestens eine Kontureinsatz eine Außenwand, die zumindest teilweise eine Kavität für das zu gießende Bauteil bildet und somit diese begrenzt und/oder berandet, und eine als Begrenzungswand ausgebildete Innenwand auf. Der mindestens eine Kern weist eine als Begrenzungswand ausgebildete Außenwand auf. An einer Begrenzungswand mindestens einer der beiden Komponenten, d. h. des Kontureinsatzes und/oder des Kerns, ist mindestens ein Abstützelement angeordnet. Begrenzungswände von zwei unmittelbar benachbarten Komponenten, d. h. des mindestens einen Kontureinsatzes und/oder des mindestens einen Kerns, umschließen mindestens einen flächigen Strömungshohlraum für ein fluides Medium. An der als Innenwand des mindestens einen Kontureinsatzes ausgebildeten Begrenzungswand ist mindestens eine Abstützelement angeordnet.

Dabei stützen die Abstützelemente den mindestens einen Strömungshohlraum zwischen den beiden unmittelbar benachbarten Komponenten ab. In der Regel befindet sich ein derartiger, durch Abstützelemente abgestützter Strömungshohlraum zwischen einem Kontureinsatz und einem Kern. Durch das Medium, das durch den mindestens einen Strömungshohlraum fließen kann, ist eine Temperatur der Kavität veränderbar, wobei dessen Temperatur kontrolliert und somit gesteuert und/oder geregelt werden kann.

Hierbei ist vorgesehen, dass der mindestens eine Kern durch den mindestens einen Strömungshohlraum und den mindestens einen Kontureinsatz von der Kavität getrennt ist.

In der Regel weist der mindestens eine Kontureinsatz mindestens eine Ausnehmung zur Aufnahme des mindestens einen Kerns auf, wobei die mindestens eine Ausnehmung durch die Innenwand des mindestens einen Kontureinsatzes begrenzt ist. Die Innenwand des mindestens einen Kontureinsatzes und die Außenwand des mindestens einen Kerns begrenzen als Begrenzungswände den Strömungshohlraum.

Das mindestens eine Abstützelement ist an der als Innenwand des mindestens einen Kontureinsatzes ausgebildeten Begrenzungswand angeordnet. Ergänzend ist das mindestens eine Abstützelement an der als Außenwand des mindestens einen Kerns ausgebildeten Begrenzungswand angeordnet.

Ein Abstand zwischen der Außenwand und der Innenwand des mindestens einen Kontureinsatzes weist einen Wert auf, der nur um einen Toleranzwert geringfügig variiert. Dabei entspricht der Toleranzwert einem Anteil des Werts für den Abstand und beträgt nur einen maximal einstelligen prozentualen Anteil des Werts. Hierdurch ergibt sich u. a., dass das Medium innerhalb des mindestens einen Strömungshohlraums zu der Außenwand des mindestens einen Kontureinsatzes und somit zu der Kavität einen gleichmäßigen, weitgehend konstanten Abstand aufweist.

Außerdem kann der mindestens eine Kern optional auf mindestens einer Abdichtungskomponente angeordnet sein, wobei der mindestens eine Kern zwischen der mindestens einen Abdichtungskomponente und dem mindestens einen Kontureinsatz angeordnet ist. In diesem Fall können der mindestens eine Kontureinsatz und die mindestens eine Abdichtungskomponente die mindestens eine Ausnehmung für den mindestens einen Kern umschließen.

Die mindestens eine Abdichtungskomponente als mindestens eine dritte Komponente des Formteils neben dem mindestens einen Kontureinsatz und dem mindestens einen Kern kann als Grundplatte ausgebildet sein und/oder bezeichnet werden, muss jedoch nicht zwingend die Gestalt einer Platte aufweisen. Eine Aufgabe der mindestens einen Abdichtungskomponente besteht darin, den mindestens einen Strömungsholraum zwischen dem mindestens einen Kern und dem mindestens einen Kontureinsatz abzudichten sowie den mindestens einen Kern und den mindestens einen Kontureinsatz zueinander zu fixieren. Allerdings sind der mindestens eine Kern und der mindestens eine Kontureinsatz zur Umsetzung eines Konzepts zum Temperieren des Werkzeugs ausreichend, weshalb eine derartige Abdichtungskomponente nicht unbedingt erforderlich ist. Die mindestens eine optionale Abdichtungskomponente kann für das Formteil eine hohe Stabilität gewährleisten und eine Anfertigung des Werkzeugs vereinfachen. Außerdem kann die mindestens eine Abdichtungskomponente im Vergleich zu dem mindestens einen Kontureinsatz aus einem preiswerteren Stahl hergestellt werden.

Das mindestens eine erfindungsgemäße Werkzeug ist zum Gießen eines Bauteils ausgebildet und umfasst mindestens zwei relativ zueinander bewegbare Formteile, die dazu ausgebildet sind, eine Kavität für das zu gießende Bauteil zu umschließen, wobei mindestens eines der Formteile als ein voranstehend beschriebenes Formteil ausgebildet ist.

Das Werkzeug ist üblicherweise als Druckgießwerkzeug ausgebildet und/oder zu bezeichnen.

Das erfindungsgemäße Verfahren ist zum Gießen eines Bauteils mit einem Werkzeug vorgesehen, das mindestens zwei relativ zueinander bewegbare Formteile aufweist, die eine Kavität für das zu gießende Bauteil umschließen. Dabei weist mindestens eines der Formteile als Komponenten mindestens einen Kontureinsatz und mindestens eine Kern auf. Der mindestens eine Kontureinsatz weist eine Außenwand, die zumindest teilweise die Kavität für das zu gießende Bauteil bildet, in der Regel begrenzt, und eine als Begrenzungswand ausgebildete Innenwand auf. Der mindestens eine Kern weist eine als Begrenzungswand ausgebildete Außenwand auf, wobei an einer Begrenzungswand mindestens einer der beiden Komponenten mindestens ein Abstützelement angeordnet ist. Die Begrenzungswände von zwei unmittelbar benachbarten Komponenten umschließen mindestens einen Strömungshohlraum, wobei während des Gießens des Bauteils durch den mindestens einen Strömungshohlraum ein fluides Medium geleitet wird, wobei das mindestens eine Abstützelement an der als Innenwand des mindestens einen Kontureinsatzes ausgebildeten Begrenzungswand angeordnet ist.

In Ausgestaltung des Verfahrens wird eine Temperatur des fluiden Mediums gesteuert und/oder geregelt und somit eingestellt, wodurch die Kavität temperiert, bspw. gekühlt oder erwärmt werden kann.

Das Formteil weist in einem Bereich hinter der Kavität und somit einer Formoberfläche einen von dem Medium bspw. einem Kühlmittel, durchströmbaren flächigen Strömungshohlraum mit Abstützelementen auf, durch den sowohl eine hohe Flächenkühlung als auch eine hohe Druckbelastbarkeit gegeben ist.

Die Komponenten des mindestens einen Formteils, das den mindestens einen flächigen Strömungshohlraum umfasst, sind in der Regel aus Metall, bspw. aus Stahl, gebildet. Das zu gießende Bauteil kann aus Kunststoff oder aus Metall gebildet sein. Zum Herstellen des Bauteils werden zwei Formteile gegeneinander gedrückt, die die Kavität für das herzustellende Bauteil umschließen. Weiterhin wird eine erhitzte und flüssige Ausgangssubstanz für das herzustellende Bauteil, bspw. flüssiger Kunststoff oder flüssiges Metall, in die Kavität gefüllt. Dabei ist es möglich, dass die in dem mindestens einen Strömungshohlraum befindliche flüssige Ausgangssubstanz ebenfalls erhitzt wird, wodurch bspw. zu erreichen ist, dass sich die Ausgangssubstanz innerhalb der Kavität gleichmäßig verteilen kann. Vor einem Öffnen der Kavität ist diese jedoch abzukühlen, so dass das herzustellende Bauteil ausreichend erstarrt und verfestigt wird. Dies kann durch Einführen eines kühlen Mediums in den mindestens einen Strömungshohlraum beschleunigt und/oder begünstigt werden.

Durch Nutzung des mindestens einen Formteils für das Werkzeug kann durch Kontrollieren und/oder Einstellen der Temperatur des Mediums auch die Temperatur der Kavität und somit des zu gießenden Bauteils beeinflusst werden.

Das vorgestellte Formteil umfasst demnach ein den mindestens einen Strömungshohlraum umfassendes Temperiersystem für das Werkzeug. Hierbei wird berücksichtigt, dass in die Kavität flüssiges Metall oder flüssiger Kunststoff als Ausgangssubstanz gegossen wird. Dabei kann Wärmeenergie über den mindestens einen Strömungshohlraum aus der Kavität abgeführt werden. Alternativ oder ergänzend kann die Kavität über den mindestens einen Strömungshohlraum auch vorgewärmt werden, wobei für die Kavität eine definierte minimale Temperatur eingestellt werden kann. Dabei ist es auch möglich, die Kavität bereits vor einem Eingießen der Ausgangssubstanz durch das Medium in dem mindestens einen Strömungshohlraum vorzuwärmen und dabei Standzeiten des Werkzeugs zu erhöhen. Mit dem mindestens einen Formteil des Werkzeugs kann sichergestellt werden, dass das mit der Kavität zu gießende Formteil gleichmäßig temperiert werden kann, wobei die Kavität eine homogene Temperatur aufweist. Durch Einstellen der homogenen, gleichmäßigen Temperatur kann u. a. eine Maßhaltigkeit für das zu gießende Bauteil eingestellt werden. Außerdem kann ein Verzug für das Bauteil vermieden werden. Innerhalb der Kavität können weiterhin Temperaurgradienten und somit Wärmespannungen vermieden werden.

In Ausgestaltung umfasst ein Formteil mehrere Komponenten, die den mindestens einen Strömungshohlraum umschließen, wodurch ein großflächiges und konturnahes Temperiersystem bereitgestellt wird. Aufgrund einer großen Fläche für einen Wärmetausch und einem geringen Abstand zu der Kavität kann mit dem mindestens einen Strömungshohlraum eine hohe Temperierleistung erreicht werden. Der Abstand zwischen der Außenwand und der Innenwand des mindestens einen Kontureinsatzes ist hiernach abhängig von einer konkreten Form des Formbauteils definierbar und kann in Ausgestaltung auch einen weitgehend konstanten Wert aufweisen. Hierdurch ist für die Kavität eine gleichmäßige Temperatur einstellbar bzw. einzustellen, wobei das zu gießende Bauteil je nach Bedarf gleichmäßig erwärmt oder abgekühlt werden kann. Hierbei kann in Ausgestaltung auch eine definierte lokale Variation des Werts des Abstands zwischen der Außenwand und der Innenwand in Abhängigkeit einer Geometrie und einer Wandstärke des zu gießenden Bauteils vorgesehen sein, wobei der Wert des Abstands bspw. über eine thermische finite Elemente-Simulation ermittelt werden kann.

Bei einer Ausführungsform des Verfahrens ist es möglich, das in der Kavität befindliche Bauteil durch Zuführung eines gekühlten Mediums in den mindestens einen Strömungshohlraum schnell abzukühlen, wobei das Bauteil schnell erstarrt und eine kurze Zykluszeit zum Herstellen des Bauteils erreicht werden kann. Durch das Temperierungssystem, das in das mindestens eine Formteil integriert ist, kann eine externe Temperierung, üblicherweise Kühlung, des Werkzeugs, bspw. durch Aufsprühen von Wasser, minimiert oder sogar vollständig ersetzt werden. Somit ist es möglich, eine ansonsten vorgesehene Beanspruchung aufgrund eines thermischen Schocks für das Werkzeug zu minimieren und somit eine Lebensdauer bzw. Standzeit des Werkzeugs zu erhöhen.

Üblicherweise ist die Kavität des Werkzeugs bei Durchführung eines Druckgießverfahrens einem hohen Innendruck ausgesetzt. Allerdings kann der mindestens eine bspw. großflächige Strömungshohlraum auch diesem Innendruck standhalten, da er durch mindestens einen kompletten Kontureinsatz und nicht nur durch eine dünne Wand von der Kavität getrennt ist. Mit dem Formteil ist ein gleichmäßiger Wärmeübergang zwischen dem zu gießenden Bauteil und dem in dem mindestens einen Strömungshohlraum befindlichen Medium zu erreichen, das den mindestens einen Strömungshohlraum gleichmäßig durchfließt. Dabei stellt die Außenwand als Vorderseite des mindestens einen Kontureinsatzes eine Begrenzung der Kavität bzw. eines entsprechenden Formhohlraums dar.

Der mindestens eine Kern ist in die Ausnehmung des mindestens einen Kontureinsatzes eingebracht, wobei der mindestens eine Strömungshohlraum zwischen dem mindestens einen Kontureinsatz und dem mindestens einen Kern gebildet wird. Durch Vorsehen des mindestens einen Abstützelements zwischen dem mindestens einen Kontureinsatz und dem mindestens einen Kern, das entweder als Teil des mindestens einen Kontureinsatzes oder des mindestens einen Kerns ausgebildet ist, kann für den mindestens einen Strömungshohlraum eine zur Aufnahme von Kräften des Innendrucks innerhalb der Kavität erforderliche Stabilität erreicht werden. Alternativ oder ergänzend wird eine Strömung des Mediums innerhalb des mindestens einen Strömungshohlraums gezielt gelenkt, wodurch der mindestens eine Strömungshohlraum gleichmäßig mit dem Medium durchströmt werden kann. Die mindestens eine Abdichtungskomponente ist zum Fixieren des mindestens einen Kontureinsatzes mit dem mindestens einen Kern ausgebildet und kann weiterhin auch zur Abdichtung des mindestens einen Strömungshohlraums verwendet werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt in schematischer Darstellung Komponenten einer Ausführungsform des erfindungsgemäßen Formteils.
Figur 2 zeigt in schematischer Darstellung ein erstes Detail der Ausführungsform des erfindungsgemäßen Formteils.
Figur 3 zeigt in schematischer Darstellung ein zweites Detail der Ausführungsform des erfindungsgemäßen Formteils.

Die Figuren werden zusammenhängend und übergreifend beschrieben, gleichen Komponenten sind dieselben Bezugsziffern zugeordnet.

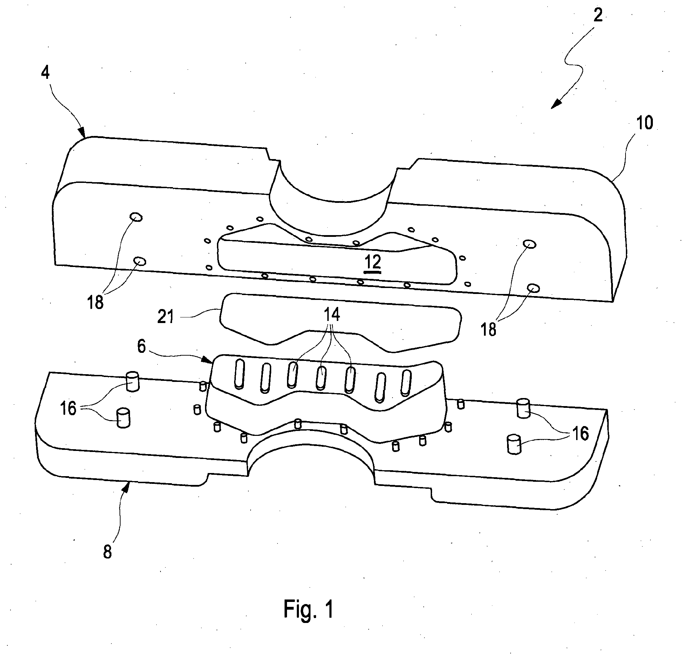

Die in Figur 1 schematisch dargestellte Ausführungsform des erfindungsgemäßen Formteils 2 umfasst als Komponenten einen Kontureinsatz 4, einen Kern 6 und eine Abdichtungskomponente 8. Die Abdichtungskomponente 8 kann als Grundplatte bezeichnet werden und/oder ausgebildet sein. Dabei weist der Kontureinsatz 4 eine in der Darstellung aus Figur 1 abgedeckte, nicht sichtbare Außenwand 10 auf, mit der eine Kavität einer Ausführungsform des erfindungsgemäßen Werkzeugs, das das Formteil 2 umfasst, begrenzt ist. Der Kontureinsatz 4 weist auf einer der Außenwand 10 abgewandten Seite eine Ausnehmung 12 auf, die von einer Innenwand begrenzt ist. Der auf der Abdichtungskomponente 8 befestigte Kern 6 weist eine Außenwand auf, auf der hier mehrere Abstützelemente 14 angeordnet sind. Außerdem sind auf einer Oberseite der Abdichtungskomponente 8 mehrere Stifte 16 und auf der Unterseite des Kontureinsatzes 4 mehrere Löcher 18 angeordnet.

Zum Bereitstellen des mehrkomponentigen bzw. mehrteiligen Formteils 2 bzw. Formeinsatzes ist die Unterseite des Kontureinsatzes 4 auf der Oberseite der Abdichtungskomponente 8 anzuordnen, wobei der Kern 6 vollständig innerhalb der Ausnehmung 12 aufgenommen wird. Ferner werden die Stifte 16 auf der Oberfläche der Abdichtungskomponente 8 in den Löchern 18 auf der Unterseite des Kontureinsatzes 4 angeordnet, wodurch der Kontureinsatz 4 relativ zu dem Kern 6 und der Abdichtungskomponente 8 positioniert wird. Da auf der Außenwand des Kerns 6 jedoch die Abstützelemente 14 angeordnet sind, berühren lediglich diese die Innenwand der Ausnehmung 12 und somit auch die Innenwand des Kontureinsatzes 4.

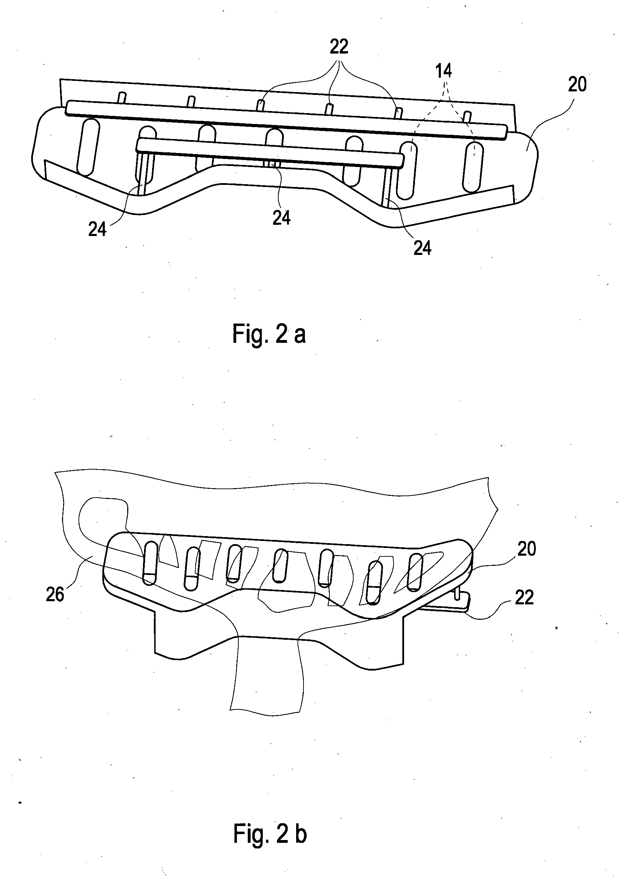

Zwischen den Abstützelementen 14 und der Innenwand der Ausnehmung 12 wird mindestens ein in Figur 2a schematisch dargestellter Strömungshohlraum 20 bereitgestellt, der einerseits durch die Innenwand der Ausnehmung 12 und somit des Kontureinsatzes 4 und andererseits durch die Außenwand des Kerns 6 sowie der darauf angeordneten Abstützelemente 14 begrenzt ist, wobei diese Abstützelemente 14 auch als Abstützstellen zwischen dem Kontureinsatz 4 und dem Kern 6 vorgesehen sind. (Eine Kontur 21 des Strömungshohlraums 20 ist in Figur 1 angedeutet.)

Wie Figur 2a zeigt, sind dem hier schematisch von unten dargestellten Strömungshohlraum 20 mehrere Zuläufe 22 zum Zuführen des fluiden Mediums sowie mehrere Rückläufe 24 für zurückführendes fluides Medium zugeordnet.

Figur 2b zeigt den Strömungshohlraum 20 von oben aus einer Perspektive, die einer Darstellung aus Figur 1 entspricht. Weiterhin ist in Figur 2a ein Bauteil 26 angedeutet, das mit dem Formteil 2 gegossen werden kann. Dabei wird eine flüssige Ausgangssubstanz in die Kavität gefüllt. Der Abstand zwischen dem Strömungshohlraum 20 zu der Außenwand 10 des Kontureinsatzes 4 ist weitgehend konstant und weist einen Wert auf, der maximal um einen Toleranzwert variiert. Beim Gießen des Bauteils 26 wird in den Strömungshohlraum 20 ein flüssiges Medium mit einer eingestellten Temperatur gefüllt, wodurch eine Temperatur des zu gießenden Bauteils 26 in der Kavität beeinflusst werden kann.

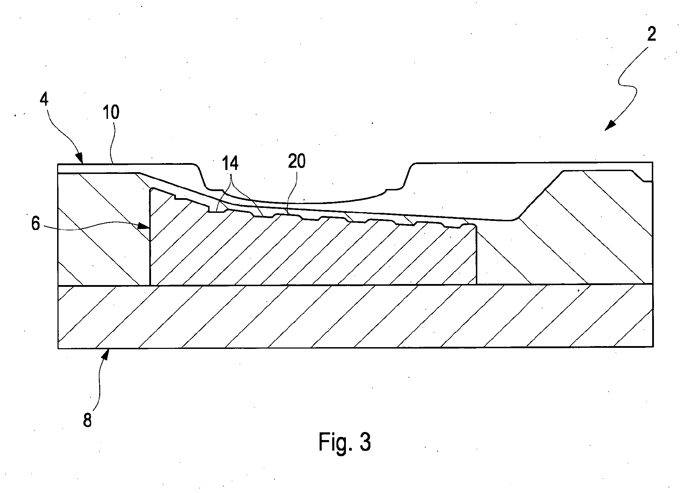

Figur 3 zeigt das Formteil 2 aus Figur 1 in zusammengebautem Zustand in einer schematischen Schnittdarstellung. Dabei zeigt Figur 3, den zwischen der Außenwand des Kern 6 und der Innenwand des Kontureinsatzes 4 befindlichen Strömungshohlraum 20, der durch die Abstützelemente 14 auf der Außenwand des Kerns 6 stabilisiert ist. Weiterhin zeigt Figur 3, dass der Strömungshohlraum 20 zu der Außenwand des Kontureinsatzes 4 und somit auch zu der Kavität, die durch die Außenwand 10 begrenzt ist einen weitgehend konstanten Abstand aufweist.

## Patentansprüche

1. Formteil für ein Werkzeug zum Gießen eines Bauteils (26), wobei das Formteil (2) als Komponenten mindestens einen Kontureinsatz (4) und mindestens einen Kern (6) aufweist, wobei der mindestens eine Kontureinsatz (4) eine Außenwand (10), die zumindest teilweise eine Kavität für das zu gießende Bauteil (26) bildet, und eine als Begrenzungswand ausgebildete Innenwand aufweist, wobei der mindestens eine Kern (6) eine als Begrenzungswand ausgebildete Außenwand aufweist, wobei an einer Begrenzungswand mindestens einer der beiden Komponenten mindestens ein Abstützelement (14) angeordnet ist, und wobei Begrenzungswände von zwei unmittelbar benachbarten Komponenten mindestens einen flächigen Strömungshohlraum (20) für ein fluides Medium umschließen, wobei das mindestens eine Abstützelement (14) an der als Innenwand des mindestens einen Kontureinsatzes (4) ausgebildeten Begrenzungswand angeordnet ist.

2. Formteil nach Anspruch 1, bei dem der mindestens eine Kern (6) durch den mindestens einen flächigen Strömungshohlraum (20) und den mindestens einen Kontureinsatz (4) von der Kavität getrennt ist.

3. Formteil nach Anspruch 1 oder 2, bei dem der mindestens eine Kontureinsatz (4) mindestens eine Ausnehmung (12) zur Aufnahme des mindestens einen Kerns (6) aufweist, wobei die mindestens eine Ausnehmung (12) durch die Innenwand des mindestens einen Kontureinsatzes (4) begrenzt ist.

4. Formteil nach einem der voranstehenden Ansprüche, bei dem das mindestens eine Abstützelement (14) an der als Außenwand des mindestens einen Kerns (6) ausgebildeten Begrenzungswand angeordnet ist.

5. Formteil nach einem der voranstehenden Ansprüche, bei dem ein Abstand zwischen der Außenwand und der Innenwand des mindestens einen Kontureinsatzes (4) einen Wert aufweist, der um einen Toleranzwert variiert.

6. Formteil nach einem der voranstehenden Ansprüche, bei dem der mindestens eine Kern (6) auf mindestens einer Abdichtungskomponente (8) angeordnet ist, wobei der mindestens eine Kern (6) zwischen der mindestens einen Abdichtungskomponente (8) und dem mindestens einen Kontureinsatz (4) angeordnet ist.

7. Werkzeug zum Gießen eines Bauteils (26), wobei das Werkzeug mindestens zwei relativ zueinander bewegbare Formteile aufweist, die dazu ausgebildet sind, eine Kavität für das zu gießende Bauteil zu umschließen, wobei mindestens eines der Formteile als Formteil (2) nach einem der voranstehenden Ansprüche ausgebildet ist.

8. Werkzeug nach Anspruch 7, das als Druckgießwerkzeug ausgebildet ist.

9. Verfahren zum Gießen eines Bauteils (26) mit einem Werkzeug, das mindestens zwei relativ zueinander bewegbare Formteile (2) aufweist, die eine Kavität für das zu gießende Bauteil umschließen, wobei mindestens eines der Formteile (2) als Komponenten mindestens einen Kontureinsatz (4) und mindestens eine Kern (6) aufweist, wobei der mindestens eine Kontureinsatz (4) eine Außenwand, die zumindest teilweise die Kavität für das zu gießende Bauteil (26) bildet, und eine als Begrenzungswand ausgebildete Innenwand aufweist, wobei der mindestens eine Kern (6) eine als Begrenzungswand ausgebildete Außenwand aufweist, wobei an einer Begrenzungswand mindestens einer der beiden Komponenten mindestens ein Abstützelement (14) angeordnet ist, und wobei Begrenzungswände von zwei unmittelbar benachbarten Komponenten mindestens einen flächigen Strömungshohlraum (20) umschließen, wobei während des Gießens des Bauteils durch den mindestens einen Strömungshohlraum (20) ein fluides Medium geleitet wird, wobei das mindestens eine Abstützelement (14) an der als Innenwand des mindestens einen Kontureinsatzes (4) ausgebildeten Begrenzungswand angeordnet ist.

10. Verfahren nach Anspruch 9, bei dem eine Temperatur des fluiden Mediums eingestellt wird.

## Claims

1. Moulding for a tool for casting a part (26), wherein the moulding (2) has as components at least one contour insert (4) and at least one core (6), wherein the at least one contour insert (4) has an outer wall (10), which at least partially forms a cavity for the part (26) to be cast and has an inner wall formed as a boundary wall, wherein the at least one core (6) has an outer wall formed as a boundary wall, wherein at least one support element (14) is arranged at a boundary wall of at least one of the two components, and wherein boundary walls of two immediately adjacent components enclose at least one flat flow hollow (20) for a fluid medium, wherein the at least one support element (14) is arranged at the boundary wall formed as the inner wall of the at least one contour insert (4).

2. Moulding according to claim 1, in which the at least one core (6) is separated from the cavity by the at least one flat flow hollow (20) and the at least one contour insert (4).

3. Moulding according to claim 1 or 2, in which the at least one contour insert (4) has at least one recess (12) for receiving the at least one core (6), wherein the at least one recess (12) is delimited by the inner wall of the at least one contour insert (4).

4. Moulding according to any of the preceding claims, in which the at least one support element (14) is arranged at the boundary wall formed as the outer wall of the at least one core (6).

5. Moulding according to any of the preceding claims, in which a distance between the outer wall and the inner wall of the at least one contour insert (4) has a value which varies by a tolerance value.

6. Moulding according to any of the preceding claims, in which the at least one core (6) is arranged on at least one sealing component (8), wherein the at least one core (6) is arranged between the at least one sealing component (8) and the at least one contour insert (4).

7. Tool for casting a part (26), wherein the tool has at least two mouldings which can be moved relative to one another and which are designed to enclose a cavity for the part to be cast, wherein at least one of the mouldings is designed as a moulding (2) according to any of the preceding claims.

8. Tool according to claim 7 which is designed as a diecasting tool.

9. Method for casting a part (26) with a tool which has at least two mouldings (2) which can be moved relative to one another, which enclose a cavity for the part to be cast, wherein at least one of the mouldings (2) has as components at least one contour insert (4) and at least one core (6), wherein the at least one contour insert (4) has an outer wall which at least partially forms the cavity for the part (26) to be cast and has an inner wall formed as a boundary wall, wherein the at least one core (6) has an outer wall formed as a boundary wall, wherein at least one support element (14) is arranged at a boundary wall of at least one of the two components, and wherein boundary walls of two immediately adjacent components enclose at least one flat flow hollow (20), wherein a fluid medium is guided through the at least one flow hollow (20) during the casting of the part, wherein the at least one support element (14) is arranged at the boundary wall formed as the inner wall of the at least one contour insert (4).

10. Method according to claim 9, in which a temperature of the fluid medium is adjusted.

## Revendications

1. Moule pour un outil pour le moulage d'un élément (26), dans lequel le moule (2) présente en tant que composants au moins un insert de contour (4) et au moins un noyau (6), dans lequel l'au moins un insert de contour (4) présente une paroi extérieure (10), qui forme au moins en partie une cavité pour l'élément (26) à mouler, et une paroi intérieure réalisée en tant que paroi de délimitation, dans lequel l'au moins un noyau (6) présente une paroi extérieure réalisée en tant que paroi de délimitation, dans lequel au moins un élément d'appui (14) est agencé au niveau d'une paroi de délimitation d'au moins un des deux composants, et dans lequel des parois de délimitation de deux composants directement adjacents entourent au moins une cavité d'écoulement plate (20) pour un milieu fluide, dans lequel l'au moins un élément d'appui (14) est agencé au niveau de la paroi de délimitation réalisée en tant que paroi intérieure de l'au moins un insert de contour (4).

2. Moule selon la revendication 1, dans lequel l'au moins un noyau (6) est séparé de la cavité par l'au moins une cavité d'écoulement plate (20) et l'au moins un insert de contour (4).

3. Moule selon la revendication 1 ou 2, dans lequel l'au moins un insert de contour (4) présente au moins un évidement (12) pour la réception de l'au moins un noyau (6), dans lequel l'au moins un évidement (12) est délimité par la paroi intérieure de l'au moins un insert de contour (4).

4. Moule selon l'une quelconque des revendications précédentes, dans lequel l'au moins un élément d'appui (14) est agencé au niveau de la paroi de délimitation réalisée en tant que paroi extérieure de l'au moins un noyau (6).

5. Moule selon l'une quelconque des revendications précédentes, dans lequel une distance entre la paroi extérieure et la paroi intérieure de l'au moins un insert de contour (4) présente une valeur qui est varié d'une valeur de tolérance.

6. Moule selon l'une quelconque des revendications précédentes, dans lequel l'au moins un noyau (6) est agencé sur au moins un composant d'étanchéité (8), dans lequel l'au moins un noyau (6) est agencé entre l'au moins un composant d'étanchéité (8) et l'au moins un insert de contour (4).

7. Outil pour le moulage d'un élément (26), dans lequel l'outil présente au moins deux moules mobiles l'un par rapport à l'autre, qui sont réalisés pour entourer une cavité pour l'élément à mouler, dans lequel au moins un des moules est réalisé en tant que moule (2) selon l'une quelconque des revendications précédentes.

8. Outil selon la revendication 7, qui est réalisé en tant qu'outil de moulage sous pression.

9. Procédé de moulage d'un élément (26) avec un outil, qui présente au moins deux moules (2) mobiles l'un par rapport à l'autre, qui entourent une cavité pour la pièce à mouler, dans lequel un des moules (2) présente en tant que composants au moins un insert de contour (4) et au moins un noyau (6), dans lequel l'au moins un insert de contour (4) présente une paroi extérieure, qui forme au moins en partie la cavité pour l'élément (26) à mouler, et une paroi intérieure réalisée en tant que paroi de délimitation, dans lequel l'au moins un noyau (6) présente une paroi extérieure réalisée en tant que paroi de délimitation, dans lequel au moins un élément d'appui (14) est agencé au niveau d'une paroi de délimitation d'au moins un des deux composants, et dans lequel des parois de délimitation de deux composants directement adjacents entourent au moins une cavité d'écoulement plate (20), dans lequel un milieu fluide est conduit à travers l'au moins une cavité d'écoulement (20) pendant le moulage de l'élément, dans lequel l'au moins un élément d'appui (14) est agencé au niveau de la paroi de délimitation réalisée en tant que paroi intérieure de l'au moins un insert de contour (4).

10. Procédé selon la revendication 9, dans lequel une température du milieu fluide est réglée.
